# EUROPEAN PATENT APPLICATION

(11) **EP 1 353 524 A1**
(43) Date of publication of application: **15.10.2003**
(21) Application number: 03252265.8
(22) Date of filing: 10.04.2003
(51) Int. Cl.: H04Q 7/38, G08B 1/08

(54) **Communication system for sending alerting messages and/or alarm signals**

(30) Priority: 10.04.2002 GB 0208222
(71) Applicant: Deaf Alerter plc, Derby DE23 6AG (GB)
(72) Inventor: Haseldine, Stephen Jeremy c/o Deaf Alerter plc, Derby DE23 6AG (GB)
(74) Representative: Skinner, Michael Paul

(57) **Abstract**

In the absence of an emergency situation, a device 16 establishes communication with a base station of a cellular mobile network by using a signing-on protocol. This allows location data to be recorded at 26, identifying the handset 16 (and by implication, the user to which the handset belongs) as being present within a particular cell. The signing-on protocol may also include a step of identifying special needs of the user, stored as disability data at 30. In the event of an alarm 28 identifying an emergency, the routing system 22 consults the location data 26 to identify devices 16 within the cell served by the arm 28, and consults disability data 30 to identify any of those devices which belong to users recorded as having special needs. This identifies users at risk from the emergency. An alerting message is sent to the devices of those users, preferably in a form appropriate to their special needs.

## Description

The present invention relates to communication systems and in particular, but not exclusively, to systems for communicating with users having special needs, such as mobility difficulties or impaired senses.

Members of the population who have special needs, such as those with wheelchairs or with impaired hearing or sight, have lifestyles which increasingly reduce the distinction between themselves and other members of society who do not have special needs. Indeed, legislation increasingly requires employers, public authorities, proprietors of public premises and the like to provide adequate facilities for them to access and use facilities enjoyed by the able-bodied. These requirements include a requirement to provide adequate warning to those with special needs, in the event of a fire or other emergency situation. For instance, those with impaired hearing may not be able to hear a conventional fire alarm. However, these requirements must be balanced with the need to respect the privacy of those with special needs.

Various proposals have been made to address these problems. Many proposals have been based around pager systems to send messages to the special needs users. However, the functionality of pager systems is a restriction in this type of application. Pager systems only provide communication in one direction (from a base station to a portable device). It is therefore not possible to know the location of a particular portable device, or to know if a particular message has been received.

The present invention provides a communication system comprising at least one base station means within the area served by the communication system to create a corresponding cell or cells therein, and at least one portable wireless communication device operable to be carried by a user, the base station means and the or each portable device being operable for two way communication, the system being further operable to select a cell or cells within which an alerting message is required, and to instruct the base station means serving the or each selected cell to send an alerting message to a portable device located within the or those cells.

The alerting message may relate to an emergency or other alarm. The alerting message may be in a form specific to a particular special need.

Preferably, an alerting message is sent only to the or a portable device identified as belonging to users having special needs. The communication system may include data storage means containing data which identifies the or those portable devices which belong to users having special needs. Alternatively, a portable device which belongs to a user having special needs may be operable to identify this to base station means. Preferably data stored in the portable device or in the data storage means identifies the nature of the special need. The identified special need may include a physical disability, such as impaired mobility, vision or hearing. The system may be operable to select the content or form of an alerting message to a portable device in accordance with the special need of the user to which the handset means belongs.

The system is preferably operable in the event of an emergency to provide a report relating to the or those portable devices within the affected cell or cells and belonging to a user having special needs. The report may include details of the number of such portable devices and/or the nature of the special needs. The report is preferably provided for use by emergency services. At least one cell preferably corresponds with commercial premises, the report being provided to the proprietor of the premises.

The base station means and the or a portable device are preferably operable to execute a signing-on protocol to establish communication between the portable device and a particular base station means when the portable device is brought into the cell served by the said base station, and to execute a signing-off protocol when the portable device leaves the said cell, whereby the system is able to determine which portable devices are located within a particular cell in the event of an emergency.

The base station means and the or a portable device are preferably operable periodically to execute a handshaking routine to provide confirmation that they remain operable for two way communication. Each portable device is preferably operable to monitor correct functioning of the portable device and to report faults to the base station means with which two way communication has been established. The or each portable device is preferably operable to monitor communication to base station means, and to detect the failure of such communication, and to alert the user in the event of failure.

Preferably at least one of the portable devices is operable by the user to send an alarm signal to the base station means with which the portable device is in communication. The system is preferably operable to identify the cell in which the user sending the alarm signal is located. The alarm signal preferably identifies a special need of the user. The system may comprise data storage means containing data which identifies a special need of at least one user, the system being operable to consult the data storage means on receipt of an alarm signal, to identify the special need of the user sending the alarm signal. The system is preferably operable to forward an alarm signal to direct assistance to the user sending the alarm signal, the system providing information relating to the location and special needs of the user.

The or each portable device may incorporate location means operable to determine the location of the portable device and to send location information. Location information may be sent to base station means. The location information may be incorporated in an alarm signal sent by the portable device. The location information may be sent automatically upon receipt of an alarm signal from the base station means. The system may be operable in conjunction with a CCTV (closed circuit television) system to direct one or more CCTV cameras to view the location of the user, in response to location information received from a portable device. The location means may incorporate a GPS (global positioning satellite) or other form of location system. The portable device may incorporate camera means operable to incorporate a picture or pictures of the location of the portable device into location information.

Preferably at least one portable device comprises a display screen on which an alerting message is displayed, in use. The portable device may be operable to display an alerting message by creating images representing a sign language. At least one portable device may comprise a speech synthesiser means operable to provide an alerting message in audible form.

The base station means and portable devices are preferably operable as a mobile telephone system.

In a second aspect, the invention provides a communication system comprising at least one base station means within the area served by the communication system to create a cell or cells therein, and at least one portable device to be carried by a user, the base station means and the or each portable device being operable for two-way communication, and wherein at least one of the portable devices is operable by the user to send an alarm signal to the base station means with which the portable device is in communication.

A communication system according to the second aspect of the invention may incorporate any of or any combination of the features set out above in relation to the first aspect of the invention.

Embodiments of the present invention will now be described in more detail, by way of example only, and with reference to the accompanying drawings, in which:-
Fig. 1 is a schematic diagram illustrating the use of base stations to create cells in the communication system;
Fig. 2 is an enlarged partial view of Fig. 1, illustrating the movement of a portable device within the system;
Fig. 3 is a schematic diagram of the system which interconnects base stations; and
Fig. 4 is a schematic block diagram for a portable device for use in the communication system of the invention.

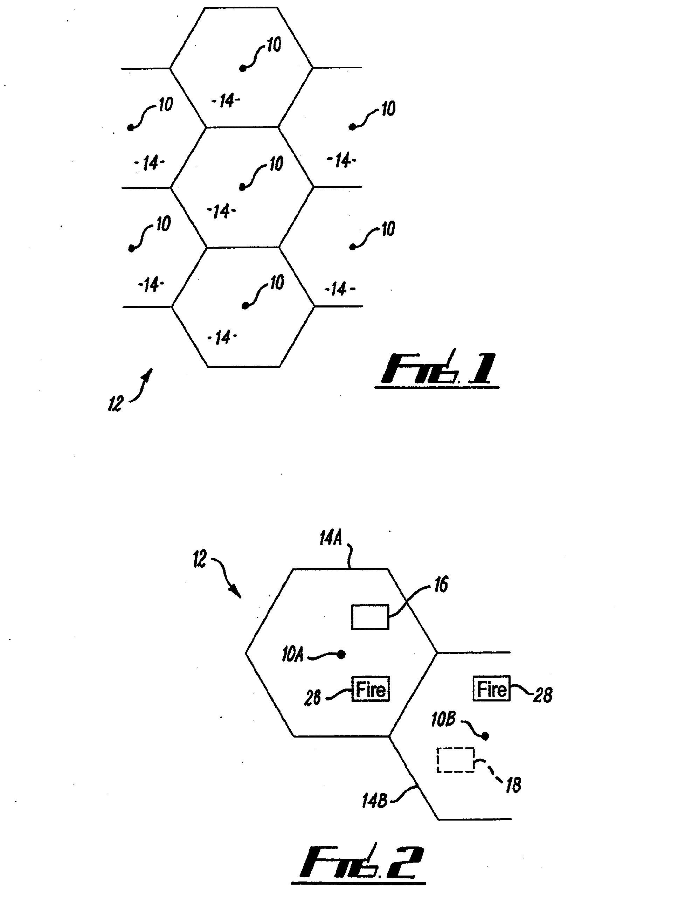

Fig. 1 illustrates in simplified diagrammatic form the principle of operation of a cellular communication system. The system includes a plurality of base stations 10 distributed through the area served by the communication system, illustrated generally at 12. The base stations 10 are able to effect two way communication with portable wireless communication devices (not shown in Fig. 1) carried by users, by a wireless transmission technique. The transmission technique may allow for multiple devices within a single cell, such as by means of multiple channels or multiple channel occupancy. Each base station 10 has a notional cell 14 around its location, in which communication with that base station 10 will be stronger than with any of the other base stations 10. The cells 14 are shown in Fig. 1 as being of identical shape and size but in reality, their shape and size will depend on factors such as transmission conditions within each cell and the number of users expected within that cell. Thus, cells 14 are likely to be smaller in areas of poor transmission conditions or in areas where traffic is expected to be heavy, such as in city centres. Thus, an area to be protected by means of the invention, such as a building, may form the whole or part of a cell, or may be covered by more than one cell.

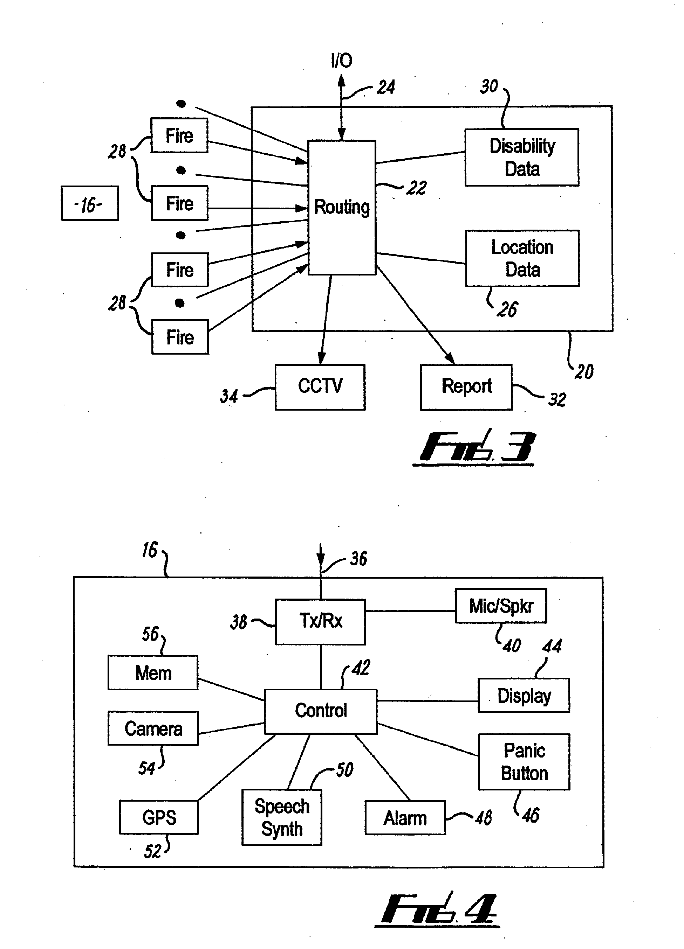

Fig. 2 illustrates simply the basic principal for allowing a user to be mobile within the area 12, while maintaining communication facilities. Fig. 2 illustrates two base stations 10a, 10b which serve adjoining cells 14a, 14b. A user carrying a portable device 16 is illustrated as present in the cell 14a served by the base station 10a. At this position, the portable device 16 will establish communication with the base station 10a. However, if the user moves to the alternative position illustrated at 18, within the cell 14b, communication with the base station 10a will cease and communication with the base station 10b will commence, thus maintaining communication of adequate quality with the portable device 26. In principal, the user with the portable device 16 is free to roam throughout the area 12 (subject to constraints such as the capacity of the base stations 10a and the traffic at any particular time).

The ability to handover communication with the portable device 16 from one base station 10 to another is achieved by a system which interconnects the base stations 10, illustrated in Fig. 3. Each base station 10 is permanently connected to a routing system 22 which also has a bi-directional input/output port at 24 for connection with other communication systems, such as conventional, wire-based telephone systems.

The routing system 22 is responsible for maintaining communication with a portable device 16 by means of an appropriate base station 10. This is achieved by monitoring the cell 14 in which the portable device 16 is located, i.e. by identifying the base station 10 with which the portable device 16 is in communication. This data is stored at 26. Any messages addressed for a particular portable device 16 and arriving at the routing system 22 will identify the portable device 16, allowing the routing system 22 to consult the location store 26 to determine which base station 10 should be used to transmit the message to the portable device 16. Messages could arrive from other portable devices in the same or other cells 14, or through the port 24.

As the user roams around the area 12, appropriate protocols will be used to determine when a portable device 16 has left a cell 14, and to identify the cell into which the portable device 16 has moved. Data in the location store 26 is then updated. These protocols may depend, for instance, on sensing signal strengths received by the portable devices 16 or base stations 10. Control of the protocols in order to allocate a portable device to a new cell, may be distributed in various ways between the portable device 16, base station 10 or routing system 22.

In accordance with the present invention, the system 20 has additional features, as follows. One or more alarm systems 28 are provided, each associated with a particular cell or cells 14. The alarms 28 are illustrated in Fig. 2 and 3 as fire alarms, and each cell 14 is illustrated as having an associated alarm 28, but it will be readily apparent from the following description that other types of alarm system could be used, and there could be more than one alarm system associated with each cell 14. Alternatively, some cells 14 may have no alarm systems 28 and some systems 28 could cover more than one cell 14.

The system 20 also contains a data store 30 containing information about disability or other special needs of users of particular portable devices. In this example, this information is collected from the user at an appropriate time, preferably as part of the procedure for establishing a new user within the system. The purpose of this disability data store 30 will become apparent.

The system 20 also includes output facilities allowing the production of a report at 32, which may be written or sent electronically, and to control a CCTV system 34, as will be described.

Before describing more fully the operation of the system 20, it is first appropriate to describe the construction of a portable device 16, of the type which would be used by a special needs user using the communication system. The device 16 could be carried, or worn, or mounted on a wheelchair or other article, as convenient for the user, taking into account their special needs.

The device 16 has an aerial 36 for transmitting and receiving signals between the device 16 and base stations 10. The aerial 36 is connected to a transmitter/receiver at 38, to which a microphone and speaker system 40 are connected, allowing conventional two way communication with the user, in the manner of a mobile telephone system. The communication is preferably fully compatible with a conventional mobile telephone system, so that a device 16, for a special needs user, can be used within a system which also caters for able-bodied users. A control unit 42 is also connected with the transmitter/receiver 38. In this example, the control unit 42 has associated with it a display 44, a panic button 46, an alarm arrangement 48 (such as a buzzer or vibrator), a speech synthesis system 50, a GPS or other location system 52, a camera 54 and a memory 56. A number of these features are optional within the scope of the invention, as will become apparent.

The basic operation of the system will occur as follows. In the absence of an emergency situation, a device 16 will establish communication with an appropriate base station 10 by using a signing-on protocol which does not itself form part of the present invention. The protocol will be executed under the control of the control unit 42 and control arrangements within the base station 10 or routing system 22. This allows location data at 26 to be set up, identifying the handset 16 (and by implication the user to which the handset belongs) as being present within the particular cell 14. The signing-on protocol may include the device identifying the special needs of the corresponding user, in the event that this information is not already stored in the data at 30.

In addition to a signing-on protocol, a handshaking routine will be executed periodically and may be initiated by the control unit 42. This will include the sending and receiving of messages between the device 16 and the base station 10 to which the device 16 has been allocated, in order to ensure that two way communication remains possible. This ensures that the location data at 26 remains valid.

The handshaking routine preferably also includes the control unit 42 making a series of checks on the correct functioning of components of devices, and reporting any faults to the routing system 22. Any reported faults can be recorded by incorporation into the record in the location data 26.

In the event that a handshaking routine with a particular device is detected as overdue by the routing system 22, the location data at 26 will be amended to indicate that the data represents the latest known location of a user with whom communication has broken down.

In the event that a device 16 leaves a cell 14 (as has been described above) the control unit 42 will execute a signing-off protocol with the base station 10 of the cell 14 which the device is leaving, whether or not the device is moving to another cell. Thus, even if the device 16 is moving beyond the range of any cell 14, this will be identified as the device leaves the cell, so that the location data at 26 can be updated. If a device is moving beyond the range of any cell, the user is preferably alerted, by the device. A signing-off protocol would allow a device to distinguish between a base station failing, and the device moving out of range.

Consequently, at any point in time, the location data store 26 will identify those devices 16 within each cell 14 and this information will be continually verified by the handshaking, signing-off and signing-on protocols. The last known location of devices which have gone missing (or are faulty) is also recorded.

In the event that an alarm system 28 identifies an emergency, such as a fire alarm system detecting a fire, the alarm 28 will indicate this to the routing system 22. The routing system 22 responds by first consulting the location data at 26 to identify the devices 16 within the cell served by the alarm 28. Having done so, the disability data at 30 is consulted to identify any of those devices which belong to users recorded as having special needs.

In the event that the routing system 22 identifies the presence of a special needs user within the cell 14 from which the alarm 28 has been received, the system 22 will initiate an alerting message to be sent to the device 16 of that user. In consequence, all special needs users within the cell can be sent an alerting message, but other users, including special needs users in other cells, need not be sent an alerting message, thus reducing the risk of unnecessary anxiety. An alerting message would desirably override other messages, in the event that communication capacity could be exceeded. Alternatively, one or more channels could be dedicated solely to alerting messages.

The form in which an alerting message is sent to a device 16 is chosen to be appropriate to the needs of the user, by consulting the disability data at 30. Thus, in the event that the user is hearing-impaired, the alerting message will instruct the handset 16 to activate the alarm 48 to vibrate to alert the user. An appropriate text message may also be displayed at 44. Alternatively, the display could be used to display an alerting message by using images in accordance with a recognised sign language, created as an Avatar animation, for example.

Alternatively, the alerting message could be sent from the routing system 22 in standard form to all devices 16 belonging to special needs users within the cell. Each device 16 would convert the received message to an appropriate form for the particular user, taking into account data stored in the memory 56 and identifying the particular needs of the user. Some alerting messages could be screened out by the device particularly if they are not appropriate to the special needs of the user.

In this manner, every special needs user within the cell served by the alarm 28 is alerted to the emergency. Additional sophistication can be introduced by providing additional information within the alerting message, so that the user is informed of the nature of the emergency, with suggestions for appropriate action or the like. These suggestions may be adapted to the needs of the particular user.

The alerting message could be used to instruct the portable devices 16 to send an automatic reply, particularly a reply which includes up to date location information. This reply could be in a form appropriate for receipt by the base stations, or a device carried by emergency personnel, or both. This facility could be incorporated into portable devices carried by able-bodied users.

Having sent alerting messages as described, the routing system 22 will issue a report at 32. This report may be provided for emergency services or to the body responsible for the premises within which the alarm has occurred. A report will identify the number of special needs users within the cell (including any with whom communication has broken down). Thus, in the event of a fire, fire fighters will be provided with information as to the number of special needs users within the cell, which can assist them in choosing an appropriate form of search, evacuation procedure and the like. Subject to requirements of privacy, and the contents of the store 30, the report can also identify the individual users and their disabilities.

Alerting messages are preferably in the form of a cell broadcast which can interrupt other traffic within a cell. This ensures that the alerting message can be received by all intended recipients, even if those within the cell begin to use their portable devices for communication, once they become aware of the emergency.

It will be readily apparent from the above description, that the benefit of the location information increases as the size of the cells 14 reduces, thus providing more precise information as to the location of the user. Future developments in mobile communication technology are likely to reduce cell sizes for various reasons unconnected with the present invention, thus increasing the effectiveness of using the present invention. Modern developments are leading to the use of small "microcells" which may be as small as a single building or a single fire evacuation zone. Naturally, it is to be preferred that the whole of a building is within a cell or group of cells, so that users have the benefit of the invention wherever they are in the building.

The device 16 has been described as having a panic button 46. The panic button 46 will be a user operated function or control, the precise form of which may depend on the special needs of the user. For example, an epileptic user may be provided with a rocker switch. In a simple form, the panic button 46 may be a single button which the user can press at any time they are concerned about their safety or welfare. When the control unit 42 senses operation of the panic button 46, the transmitter 38 is instructed to send an alarm signal. This allows the routing system 22 to detect the alarm and issue a report at 32, to identify the cell in which the user is located, and to summon assistance to the user.

The effectiveness of the assistance can be enhanced in various ways. The alarm signal sent from the device 16 will preferably include information relating to the identity of the user and the nature of their special needs, which may be stored in the memory 56. The panic button 46 may be implemented as a set of controls, or a set of options available, for instance, by menu selection, to enable the nature of the users concerns to be identified. This enhanced information allows appropriate assistance to be selected more easily.

The GPS system 52 (or another location system, such as a radio location system) and camera 54 may further enhance the speed with which assistance can reach the user. When the control unit 42 senses operation of the panic button 46, the unit 42 may consult the system 52 to obtain a precise indication of the current location of the device 16. This information is then conveyed as part of the alarm message. This facility is particularly useful in the event that the user is within a large cell 14, helping to reduce search time involved in locating the user.

Alternatively, or in addition, an image could be provided by the camera 54 and sent as part of the alarm message, to assist in identifying the location of the user. In a further alternative, the camera 54 could be used subsequently, to send a continuous image or series of images (such as a video image), allowing emergency services to view the surroundings as the user directs the device 16 in various different directions. Again, this may assist in identifying the location of the user, particularly in the event that the user is not familiar with the surroundings.

Fig. 3 shows the routing system 22 connected to a CCTV system 34. It is envisaged that once GPS data or other information specifying the location of the user has been received by the system 20, a CCTV system 34 could be instructed to direct one or more cameras to view the location in which the user is understood to be, thus further enhancing the information available to those seeking to provide assistance.

If appropriate, an alerting message may be annunciated by the voice synthesiser system 50.

Many variations and modifications can be made to the apparatus described above, without departing from the scope of the present invention. While it is preferred that the routing system and base stations are provided by a conventional mobile communication system, with appropriate modification, the invention could be implemented by a separate system. It is preferred for data, particularly disability data, to be stored within the telephone system at 30, for ready access, but this information could alternatively be stored in the portable device, at 56, particularly in the interests of privacy. In that event, it would be desirable for the signing-on protocols to include a step of identifying the special needs of the user. Reports provided at 32 have been described as for use by emergency services. Alternatively, they could be provided for use by other responsible authorities, such as an employer in the case of the system being implemented at a place of work. In that example, employment records, including records of special needs etc., can be consulted as part of the preparation of the report.

While the above examples have referred to alerting signals which relate to emergencies, other uses are possible. For example, a cell located at an airport, railway station or the like, could be used to alert special needs users within that cell to information such as departure announcements. The nature of the information sent in these circumstances could be specific to the special needs of the user and could be derived from a network such as the internet.

There may be provision for alerting signals to be repeated in the event that a further portable device seeks to initiate handshaking with a cell which has sent an alerting message. This provides protection for a user who unwittingly moves into that cell after an alerting message has been sent.

Alterting messages could be generated automatically, for example by a fire alarm system.

The portable devices preferably have full functionality as mobile (cellular) telephones, and/or other 2 way communication, such as e-mail, but could be devices dedicated to the alerting functions described.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A communication system comprising at least one base station means within the area served by the communication system to create a corresponding cell or cells therein, and at least one portable wireless communication device operable to be carried by a user, the base station means and the or each portable device being operable for two way communication, the system being further operable to select a cell or cells within which an alerting message is required, and to instruct the base station means serving the or each selected cell to send an alerting message to a portable device located within the or those cells.

2. A communication system according to claim 1, wherein the alerting message relates to an emergency or other alarm.

3. A communication system according to claim 1 or 2, wherein the alerting message is in a form specific to a particular special need.

4. A communication system according to any preceding claim, wherein an alerting message is sent only to the or a portable device identified as belonging to users having special needs.

5. A communication system according to claim 4, wherein the communication system includes data storage means containing data which identifies the or those portable devices which belong to users having special needs.

6. A communication system according to claim 4, wherein a portable device which belongs to a user having special needs is operable to identify this to base station means.

7. A communication system according to claim 5 or 6, wherein data stored in the portable device or in the data storage means identifies the nature of the special need.

8. A communication system according to claim 7, wherein the identified special need includes a physical disability, such as impaired mobility, vision or hearing.

9. A communication system according to any of claims 4 to 8, wherein the system is operable to select the content or form of an alerting message to a portable device in accordance with the special need of the user to which the handset means belongs.

10. A communication system according to any of claims 4 to 9, wherein the system is operable in the event of an emergency to provide a report relating to the or those portable devices within the affected cell or cells and belonging to a user having special needs.

11. A communication system according to claim 10, wherein the report includes details of the number of such portable devices and/or the nature of the special needs.

12. A communication system according to claim 10 or 11, wherein the report is provided for use by emergency services.

13. A communication system according to any preceding claims, wherein at least one cell corresponds with commercial premises, the report being provided to the proprietor of the premises.

14. A communication system according to any preceding claim, wherein the base station means and the or a portable device are preferably operable to execute a signing-on protocol to establish communication between the portable device and a particular base station means when the portable device is brought into the cell served by the said base station, and to execute a signing-off protocol when the portable device leaves the said cell, whereby the system is able to determine which portable devices are located within a particular cell in the event of an emergency.

15. A communication system according to any preceding claim, wherein the base station means and the or a portable device are operable periodically to execute a handshaking routine to provide confirmation that they remain operable for two way communication.

16. A communication system according to any preceding claim, wherein each portable device is operable to monitor correct functioning of the portable device and to report faults to the base station means with which two way communication has been established.

17. A communication system according to any preceding claim, wherein the or each portable device is operable to monitor communication to base station means, and to detect the failure of such communication, and to alert the user in the event of failure.

18. A communication system according to any preceding claim, wherein at least one of the portable devices is operable by the user to send an alarm signal to the base station means with which the portable device is in communication.

19. A communication system according to claim 18, wherein the system is operable to identify the cell in which the user sending the alarm signal is located.

20. A communication system according to claim 18 or 19, wherein the alarm signal identifies a special need of the user.

21. A communication system according to claim 18 or 19, wherein the system comprises data storage means containing data which identifies a special need of at least one user, the system being operable to consult the data storage means on receipt of an alarm signal, to identify the special need of the user sending the alarm signal.

22. A communication system according to any of claims 18 to 21, wherein the system is operable to forward an alarm signal to direct assistance to the user sending the alarm signal, the system providing information relating to the location and special needs of the user.

23. A communication system according to any preceding claim, wherein the or each portable may incorporate location means operable to determine the location of the portable device and to send location information.

24. A communication system according to any preceding claim, wherein location information is sent to base station means.

25. A communication system according to claim 24, wherein the location information is incorporated in an alarm signal sent by the portable device.

26. A communication system according to any of claims 23 to 25, wherein the location information is sent automatically upon receipt of an alarm signal from the base station means.

27. A communication system according to any of claims 23 to 26, wherein the system is operable in conjunction with a closed circuit television system to direct one or more cameras to view the location of the user, in response to location information received from a portable device.

28. A communication system according to any of claims 23 to 27, wherein the location means incorporate a GPS (global positioning satellite) or other form of location system.

29. A communication system according to any of claims 23 to 28, wherein the portable device incorporates camera means operable to incorporate a picture or pictures of the location of the portable device into location information.

30. A communication system according to any of the preceding claims, wherein at least one portable device comprises a display screen on which an alerting message is displayed, in use.

31. A communication system according to claim 30, wherein the portable device is operable to display an alerting message by creating images representing a sign language.

32. A communication system according to claim 30 or 31, wherein at least one portable device comprises a speech synthesiser means operable to provide an alerting message in audible form.

33. A communication system according to any preceding claim, wherein the base station means and portable devices are operable as a mobile telephone system.

34. A communication system comprising at least one base station means within the area served by the communication system to create a cell or cells therein, and at least one portable device to be carried by a user, the base station means and the or each portable device being operable for two-way communication, and wherein at least one of the portable devices is operable by the user to send an alarm signal to the base station means with which the portable device is in communication.

35. A communication system according to claim 34 and any of claims 1 to 33.
